# FASCICULE DE BREVET EUROPEEN

(11) **EP 3 768 590 B1**
(45) Date de publication et mention de la délivrance du brevet: **02.08.2023**
(21) Numéro de dépôt: 19715822.3
(22) Date de dépôt: 18.03.2019
(51) Int. Cl.: B63H 9/06, B64D 17/02

(54) **AILE SOUPLE COMPORTANT UNE ENTRÉE D'AIR ACTIVE ET UNE ENTRÉE D'AIR PASSIVE**
FLEXIBLER FLÜGEL MIT EINEM AKTIVEN LUFTEINLASS UND EINEM PASSIVEN LUFTEINLASS
FLEXIBLE WING COMPRISING AN ACTIVE AIR INLET AND A PASSIVE AIR INLET

(30) Priorité: 19.03.2018 FR 1852320
(43) Date de publication de la demande: 27.01.2021
(73) Titulaire: AIRSEAS, 44100 Nantes (FR)
(72) Inventeur: GAGNAIRE, Benoît, 31470 FONSORBES (FR)
(74) Mandataire: Junca, Eric
(86) Numéro de dépôt international: PCT/EP2019/056674
(87) Numéro de publication internationale: WO 2019/179924

(56) Documents cités:
- DE-A1- 19 941 885
- FR-A1- 2 741 856
- JP-A- H04 254 296
- US-A1- 2011 162 569

## Description

### DOMAINE TECHNIQUE GENERAL ET ART ANTERIEUR

La présente invention concerne le domaine des ailes destinées à assurer une fonction de traction. L'invention vise en particulier une aile à caissons configurée pour permettre la traction d'un bateau.

De manière connue, une aile souple est utilisée dans certaines disciplines sportives telles que le parapente et le kitesurf, de manière à tracter un individu. Une telle aile souple, communément désignée « aile de traction », comporte une voilure reliée à une pluralité de lignes ou de câbles, connus sous la désignation de « suspentes », reliant l'individu à la voilure pour transmettre la portance de l'aile et pour la contrôler en vol.

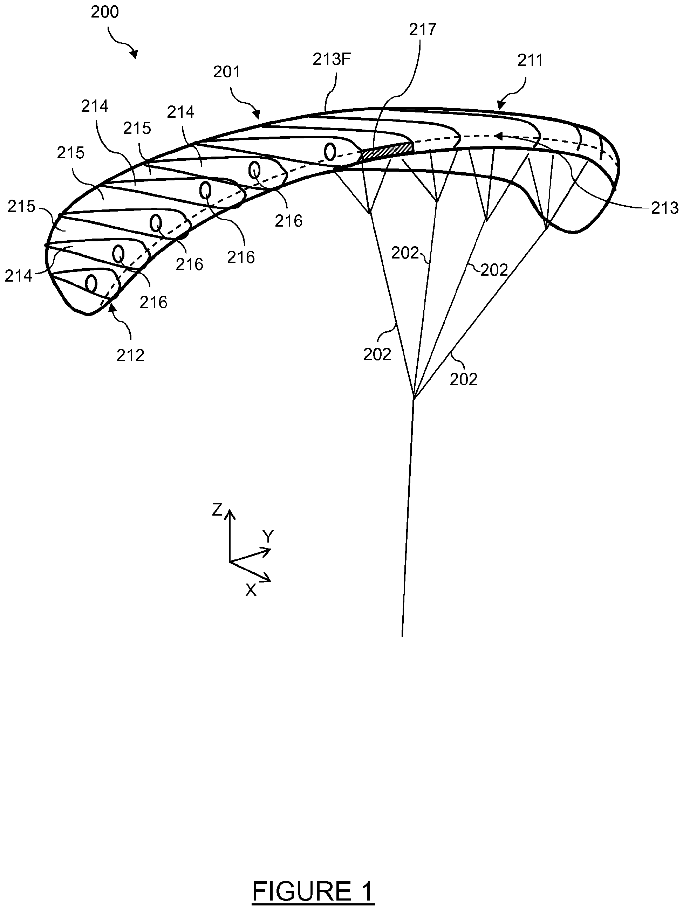

Il est connu notamment une aile à caissons représentée sur la figure 1. Une telle aile 200 comprend une voilure 201 reliée à une pluralité de suspentes 202. La voilure 201, généralement en tissu, comprend une paroi supérieure 211, connue sous la désignation d' « extrados » et une paroi inférieure 212, communément désignée « intrados », solidarisées à leurs extrémités de manière à ménager un espace à l'intérieur de la voilure 201. Les extrémités, pouvant être cousues, définissent à l'avant de la voilure 201, un bord d'attaque 213, premier bord à entrer en contact avec un flux d'air, et à l'arrière, un bord de fuite 213F. Le profil complet de la voilure 201 est configuré pour permettre une circulation optimale du flux d'air autour de l'aile 200.

Afin de maintenir le profil de l'aile 200 recherché, la paroi supérieure 211 et la paroi inférieure 212 sont également reliées par une pluralité de parois internes 214 transversales formant des cloisons de séparation, également désignés « nervures », qui délimitent une pluralité de caissons 215 comme illustré à la figure 1. De manière connue, pour maintenir la forme de l'aile 200 déployée, chaque caisson 215 est gonflé de manière à ce que la pression intérieure de chaque caisson 215 soit supérieure à la pression extérieure.

Pour cela, le bord d'attaque 213 comprend une entrée d'air 217, permettant de gonfler la voilure 201 lorsque l'aile 200 est dans un flux d'air. En effet, la vitesse du vent sur l'aile 200 génère une pression, désignée pression extérieure Pe, sur le bord d'attaque 213 de l'aile 200. Une telle pression extérieure Pe, correspondant à la pression atmosphérique additionnée de la pression dynamique appliquée sur le bord d'attaque 213, est supérieure à la pression statique autour de l'aile 200, et permet le gonflage de l'aile 200 en introduisant un flux d'air dans la voilure 201 via l'entrée d'air 217. En outre, les parois internes 214 comprenant chacune un orifice de passage 216, l'air circule dans chaque caisson 215, permettant à l'aile 200 de se gonfler entièrement. Lorsque l'aile 200 est entièrement gonflée, celle-ci est configurée pour générer une force, désignée « portance », adaptée pour permettre à l'aile 200 de générer une traction, de s'élever et de se maintenir en altitude. A titre d'exemple, en parapente, un utilisateur décolle en courant sur une distance courte. Une telle course permet d'atteindre une vitesse suffisante pour permettre à l'aile 200 de porter le parapentiste. Ainsi une aile 200 à caissons comprenant une telle entrée d'air 217 est gonflée à une pression intérieure Pi égale à la pression extérieure Pe appliquée sur le bord d'attaque 213 de l'aile 200.

Afin de maintenir l'aile 200 gonflée et rigide en vol, la pression intérieure doit être conservée sensiblement égale à la pression extérieure devant l'entrée d'air.

Cependant, lorsque le vent est faible, le gonflage de la voilure 201 est faible, ce qui présente un inconvénient. En effet, la pression extérieure appliquée sur l'entrée d'air 217 intégrée au bord d'attaque 213 de la voilure 201 peut s'avérer insuffisante pour permettre un gonflage rapide et suffisant de l'ensemble de la voilure 201. Cette dernière ayant une prise au vent importante pendant une telle phase de gonflage, les efforts nécessaires pour maintenir la voilure 201 sont également importants. De plus, un gonflage insuffisant ou lent de certains caissons 215, peut entrainer l'emmêlement de la voilure 201 dans les suspentes 202 ou bien l'emmêlement des suspentes entre elles par exemple, ce qui est particulièrement le cas durant la phase de gonflage de la voilure 201, c'est-à-dire lorsque l'aile 200 est dépliée et exposée face au vent en vue d'être mise en vol, puisque celle-ci n'est pas encore gonflée rigidement.

De plus, un gonflage insuffisant ou lent peut entrainer une rigidité faible de la voilure 201. Si la pression extérieure appliquée sur l'entrée d'air 217 est faible, la pression intérieure est insuffisante pour garantir la forme et la rigidité de l'aile. La conséquence est un profil aérodynamique de l'aile moins performant et donc une portance de l'aile non optimale.

Aussi, afin de permettre un meilleur gonflage d'une aile 200 à caissons, il est connu des dispositifs de gonflage, configurés pour assurer un apport en air suffisant pour créer une pression importante à l'intérieur de la voilure 201, même en cas de vent faible ou de vitesse faible de l'aile 200 limitant l'introduction d'air par l'entrée d'air 217.

A ce titre, le document FR 2741856 A1 décrit une voilure de parapente comprenant une unique entrée d'air dans laquelle est monté un dispositif de gonflage se présentant sous la forme d'un tube de prise d'air comprenant une soufflante alimentée électriquement de manière à propulser de l'air sous pression à l'intérieur de la voilure. Un tel tube de prise d'air est fixé à l'intrados sous la voilure et présente une forme de L, de manière à disposer la prise d'air face au vent. Un capteur de pression est intégré à la voilure de manière à mesurer régulièrement la pression à l'intérieur de la voilure. En cas de baisse de pression, la soufflante est commandée de manière à introduire de l'air dans la voilure. La soufflante et le tube de prise d'air décrit dans le document FR 2741856 A1 permettent ainsi de maintenir une pression importante à l'intérieur de la voilure pour assurer la rigidité de l'aile.

Cependant, un tel dispositif de gonflage présente l'inconvénient de consommer une quantité importante d'énergie. Par ailleurs, l'utilisation d'un tel dispositif de gonflage nécessite que l'aile soit hermétique. En cas de défaillance du dispositif de gonflage, il n'est plus possible de gonfler l'aile, ce qui présente un inconvénient.

Un des objectifs de la présente invention est donc de proposer une aile à caissons configurée pour être gonflée quelques soient les conditions extérieures liées au vent tout en étant fiable et économe en énergie.

### PRESENTATION GENERALE DE L'INVENTION

A cet effet, l'invention concerne une aile souple comprenant une voilure et une pluralité de suspentes reliées à la voilure, ladite voilure comprenant une paroi supérieure et une paroi inférieure, définissant un volume intérieur ayant une pression intérieure, au moins une entrée d'air active et au moins un dispositif de gonflage actif configuré pour injecter de l'air depuis l'extérieur, ayant une pression extérieure, dans le volume intérieur de la voilure via l'entrée d'air active.

L'aile selon l'invention est remarquable en ce que la voilure comprend au moins une entrée d'air passive, configurée pour autoriser une circulation d'air depuis l'extérieur dans le volume intérieur de la voilure et au moins un dispositif anti-retour configuré, d'une part, pour autoriser une circulation d'air depuis l'extérieur vers le volume intérieur de la voilure via ladite entrée d'air passive lorsque la pression intérieure est inférieure à la pression extérieure devant l'entrée d'air passive et, d'autre part, pour interdire une circulation d'air depuis le volume intérieur de la voilure vers l'extérieur via ladite entrée d'air passive lorsque la pression intérieure est supérieure à la pression extérieure devant l'entrée d'air passive.

Une telle aile souple, configurée pour permettre la traction d'un bateau, permet de s'assurer du gonflage optimal de la voilure, permettant avantageusement de garantir une pression optimale à l'intérieur d'une telle voilure, tout en limitant les conséquences liées à des fuites d'air. Le dispositif de gonflage et le dispositif anti-retour de l'aile permettent de maintenir la rigidité de la voilure quelles que soient les conditions extérieures. Le dispositif anti-retour permet avantageusement de limiter la baisse de pression dans la voilure et donc les risques de déformations non souhaitées de l'aile. En cas de baisse de la pression extérieure, par exemple en cas de chute rapide de la vitesse du vent connu de l'homme du métier sous le terme « dévente ». Un tel dispositif anti-retour permet également d'empêcher l'échappement de l'air par l'entrée d'air passive introduit depuis le dispositif de gonflage. L'utilisation d'une entrée d'air passive et d'une entrée d'air active est ainsi synergique et permet d'obtenir des performances élevées de manière économique.

Dans le cas de l'utilisation d'une telle aile pour la traction d'un bateau, l'ensemble des caractéristiques précitées permettent un meilleur gonflage de l'aile et une meilleure stabilité de la forme de l'aile, notamment, lors de déploiement et de la récupération de l'aile, mais aussi pendant le vol.

De manière préférée, le dispositif anti-retour se présente sous la forme d'un manchon, permettant l'utilisation d'un dispositif souple permettant de s'assurer de la fermeture du dispositif uniquement sous l'effet de la pression et même en cas de différence peu importante entre l'intérieur et l'extérieur de la voilure. De plus, une telle forme de manchon permet avantageusement de plaquer le dispositif anti-retour sur une face interne de la paroi inférieure (ou de la paroi supérieure) permettant de limiter les fuites d'air depuis le volume intérieur de la voilure vers l'extérieur.

De manière alternative, le dispositif anti-retour se présente sous la forme d'un clapet battant configuré pour évoluer entre une position de fermeture, dans laquelle le clapet battant obture l'entrée d'air passive, et une position d'ouverture, dans laquelle le clapet battant n'obture pas l'entrée d'air passive.

Selon une forme préférée de l'invention, la paroi supérieure et la paroi inférieure étant en tissu, le manchon est formé dans un matériau souple, de préférence, en tissu. De préférence encore, le manchon est issu de matière des parois supérieure et inférieure. Une telle formation du manchon directement dans le tissu de la paroi inférieure et/ou de la paroi supérieure permet une liaison simple homogène entre le dispositif anti-retour et la voilure, par exemple par couture. Une telle liaison est ainsi similaire à la liaison entre la paroi supérieure et la paroi inférieure, permettant par exemple de limiter les surcoûts de fabrication de l'aile.

De préférence, le manchon présente une longueur supérieure à deux fois la plus grande dimension de l'entrée d'air passive, permettant de s'assurer du recouvrement complet de l'ouverture de l'entrée d'air passive, sans risque de fuite d'air.

Selon un aspect, le dispositif de gonflage comprend un clapet de sécurité, configuré pour limiter le passage d'un flux d'air par l'entrée d'air active vers l'extérieur. Un tel clapet de sécurité permet avantageusement, lorsque le dispositif de gonflage est inactif par exemple, de ne pas autoriser le dégonflage de la voilure par le dispositif de gonflage, en cas de réduction de la pression extérieure si la vitesse du vent chute rapidement, par exemple dans une situation dite de « dévente ». De manière préférée, le dispositif de gonflage comprend en outre un dispositif de commande configuré pour ouvrir le clapet de sécurité du dispositif de gonflage, de manière à permettre le dégonflage de la voilure.

Avantageusement, le dispositif de gonflage actif comporte une soufflante configurée, d'une part, pour tourner selon un premier sens de rotation afin de gonfler le volume intérieur de la voilure et, d'autre part, pour tourner selon un deuxième sens de rotation afin de dégonfler le volume intérieur de la voilure. L'utilisation d'une telle soufflante permet à la fois d'assurer un gonflage suffisant en cas de vent faible par exemple et d'accélérer le dégonflage de la voilure dans le but de limiter la prise au vent d'une aile insuffisamment gonflée. Une voilure gonflée non rigidement ou insuffisamment gonflée peut faséyer et peut par exemple provoquer l'emmêlement des suspentes ou bien une usure prématurée du tissu de l'aile, la soufflante permet de limiter un tel risque.

De manière préférée, l'aile comprend un module de commande configuré pour activer la soufflante du dispositif de gonflage de manière à actionner le premier ou le deuxième sens de rotation de la soufflante du dispositif de gonflage. Un tel module de commande permet ainsi de commander aisément le gonflage ou le dégonflage de la voilure.

De manière avantageuse, l'aile comprend des moyens de mesure de la pression intérieure et de la pression extérieure de manière à déterminer une surpression, reliés au module de commande. Le module de commande du dispositif de gonflage est configuré pour activer la soufflante du dispositif de gonflage lorsque la surpression est inférieure ou égale à un seuil prédéterminé. De tels moyens de mesure permettent de contrôler régulièrement et de manière dynamique la pression de l'air à l'intérieur et à l'extérieur du volume intérieur, de manière à permettre, lorsque la pression intérieure est insuffisante, la commande, via le module de commande, de l'actionnement du dispositif de gonflage. Les moyens de mesure de la pression extérieure et intérieure associés au module de commande permettent d'ajuster et de régler la pression à l'intérieur de la voilure de manière dynamique afin de limiter la consommation électrique du dispositif de gonflage.

Selon une forme de réalisation de l'invention, les moyens de mesure comprennent un premier capteur de pression, configuré pour mesurer la pression à l'intérieur de la voilure, et un deuxième capteur de pression, configuré pour mesurer la pression à l'extérieur de la voilure. De tels capteurs de pression sont de préférence reliés électriquement au module de commande configurés pour mesurer la différence de pression entre l'intérieur et l'extérieur de la voilure.

De manière alternative, les moyens de mesure se présentent sous la forme d'un unique capteur de mesure de la différence de pression entre l'intérieur et l'extérieur de la voilure. Un tel capteur de mesure permet ainsi une lecture directe de la différence de pression entre l'intérieur et l'extérieur de la voilure.

Selon un aspect de l'invention, les moyens de mesure de la différence de pression permettent également de connaitre l'usure de l'aile. En effet, lorsque l'aile est usée, la porosité du tissu des parois de la voilure augmente. De plus, des distensions peuvent apparaitre au niveau d'orifices présents dans les coutures et entrainer l'échappement d'air, diminuant ainsi l'étanchéité de l'aile. En pratique, cette porosité entraine une diminution de la pression intérieure de l'aile. En dessous d'un certain seuil, la pression intérieure n'est plus suffisante pour permettre un vol optimal et l'aile doit être changée ou réparée. A titre d'exemple, un niveau de fuite d'air, correspondant à un degré d'usure de l'aile, peut être déterminé de manière pratique en utilisant le dispositif de gonflage et la mesure des pressions. De plus, le dispositif de gonflage permet de compenser la perte de pression due à l'usure de l'aile et de prolonger ainsi la durée de vie de l'aile.

Selon un aspect de l'invention, ladite soufflante du dispositif de gonflage présentant une vitesse de rotation, le module de commande du dispositif de gonflage est configuré pour réguler la vitesse de rotation de la soufflante, de manière à maintenir une surpression dans le volume intérieur de la voilure, mesurée par les moyens de mesure de pression, à une valeur prédéterminée.

Selon une forme de réalisation, le module de commande du dispositif de gonflage est configuré pour comparer le débit d'air de la soufflante et la différence entre la pression intérieure et la pression extérieure de la voilure, de manière à détecter un besoin de maintenance de l'aile dû à un degré de fuite excessif de l'aile.

Selon un aspect préféré de l'invention, la voilure comportant une pluralité de volumes indépendants, chaque volume indépendant comprend au moins une entrée d'air passive associée à un dispositif anti-retour. Une telle pluralité d'entrées d'air passives permet d'assurer un gonflage plus rapide de la voilure, permettant de limiter les risques d'emmêlement des suspentes dus à une voilure insuffisamment gonflée ou non rigide. En effet, la pluralité d'entrées d'air passives, associée chacune à un dispositif anti-retour, permet à la voilure d'autoriser un plus grand débit d'air pour le gonflage et d'atteindre rapidement une pression intérieure égale à la pression extérieure, tout en maintenant une telle pression à l'intérieur de la voilure en n'autorisant aucun passage d'air depuis le volume intérieur vers l'extérieur via la pluralité d'entrées d'air passives.

De préférence, l'aile comprend une pluralité d'entrées d'air actives, comprenant chacune un dispositif de gonflage, chaque dispositif de gonflage étant configuré pour être commandé de manière à permettre le gonflage ou le dégonflage uniquement d'une partie de la voilure. Chaque dispositif de gonflage indépendant permet par exemple d'augmenter la pression d'un volume indépendant lorsque la pression intérieure baisse localement.

De préférence, l'aile comporte un dispositif de contrôle du vol configuré pour appliquer une tension à une ou plusieurs suspentes, de manière à contrôler le déplacement de l'aile. De manière préférée, le module de commande est intégré audit dispositif de contrôle du vol.

De préférence, l'aile comprend un dispositif de contrôle, relié aux suspentes, configuré pour tirer/relâcher sur une ou plusieurs suspentes. De préférence encore, le module de commande est relié électroniquement au dispositif de contrôle afin de centraliser la commande de l'aile et permettre une synchronisation des suspentes et du gonflage de l'aile afin de permettre une commande optimale.

De manière préférée, le module de commande et le dispositif de contrôle appartiennent à une même unité fonctionnelle.

L'invention a également pour objet un bateau comprenant au moins un organe d'accroche et une aile telle que décrite précédemment reliée audit organe d'accroche afin de permettre la traction du bateau.

Selon une forme préférée, le bateau comprend en outre un treuil configuré pour permettre le lancement et la récupération de l'aile.

De manière préférée, le bateau comprenant en outre un générateur électrique, le dispositif de gonflage est alimenté par ledit générateur électrique. De préférence, le bateau comportant un moteur de déplacement, le générateur électrique est entrainé par ledit moteur de déplacement du bateau.

L'invention concerne également un ensemble d'un générateur électrique et d'une aile telle que décrite précédemment, ledit générateur comprenant un élément fixe (stator) et un élément mobile (rotor) par rapport audit élément fixe, et un câble de traction, ledit élément mobile étant configuré pour être entrainé en rotation par rapport audit élément fixe, ledit câble de traction étant relié audit élément mobile, de manière à permettre l'enroulement du câble de traction autour de l'élément mobile. Avantageusement, la traction réalisée par l'aile sur le câble de traction permet ainsi le déroulement du câble de traction, entrainant en rotation l'élément mobile (rotor) du générateur électrique, permettant avantageusement la production d'énergie électrique.

L'invention concerne enfin un procédé de gonflage d'une aile telle que décrite précédemment, ledit procédé comprenant les étapes de :
- déploiement de la voilure de manière à positionner l'entrée d'air passive face au vent afin de gonfler la voilure de manière passive,
- lorsque le gonflage est insuffisant, activation du dispositif de gonflage afin de gonfler la voilure de manière active,
- fermeture du dispositif anti-retour lorsque la pression intérieure est supérieure à la pression extérieure devant l'entrée d'air.

Grâce à l'invention, l'aile est maintenue gonflée de manière continue et indépendamment des conditions de vent. Le dispositif anti-retour se ferme de manière automatique et passive. L'aile est ainsi gonflée de manière à réaliser une traction optimale en consommant une énergie minimale. De préférence, le dispositif de gonflage est activé jusqu'à atteindre un seuil de différence de pression prédéterminé.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une représentation schématique d'une aile souple à caissons selon l'art antérieur ;
- la figure 2 est une représentation schématique d'une aile souple selon une forme de réalisation préférée de l'invention, permettant la traction d'un bateau ;
- les figures 3 à 5 sont des représentations schématiques du fonctionnement d'un dispositif anti retour d'une entrée d'air passive selon l'invention ;
- la figure 6 est une représentation schématique des étapes d'un procédé de gonflage de l'aile souple de la figure 2 ;
- les figures 7 et 8 sont des représentations schématiques d'un appendice de l'aile souple de la figure 2 au repos (Figure 7) et en utilisation (Figure 8) et
- les figures 9 et 10 sont des représentations schématiques d'éjection d'un flux d'air à différentes positions de l'extrados.

Il faut noter que les figures exposent l'invention de manière détaillée pour mettre en oeuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

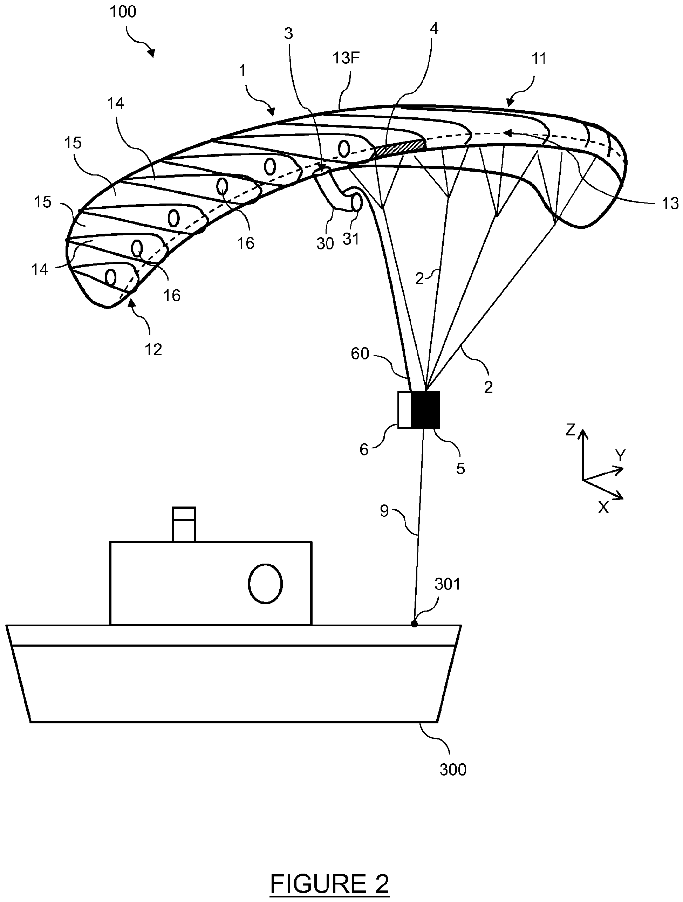

Comme illustré à la figure 2, une aile 100 souple comporte une voilure 1 et une pluralité de suspentes 2 configurées pour relier la voilure 1 à un bateau 300 de manière à permettre sa traction. Les suspentes 2 peuvent de manière alternative permettre de relier la voilure 1 à un individu dans le cas d'une aile 100 de parapente par exemple.

L'invention est décrite dans ce document dans le cas de la traction d'un bateau 300. Dans cet exemple, les suspentes 2 sont reliées à un organe d'accroche 301 du bateau 300 via un câble de traction 9. L'organe d'accroche 301 d'un tel bateau 300 est, de préférence, un treuil (non représenté) de manière à permettre le lancement et la récupération de l'aile 100. Un tel treuil permet de faire varier la longueur du câble de traction 9 et donc la hauteur de l'aile 100 par rapport au bateau 300. L'aile 100 souple comporte un dispositif de contrôle 5, relié aux suspentes 2, configuré pour tirer/relâcher sur une ou plusieurs suspentes 2 indépendamment de manière à diriger l'aile 100 en vol.

Une telle aile 100 s'étend longitudinalement selon un axe X, latéralement selon une axe Y et verticalement selon une axe Z, de manière à former un repère orthogonal (X, Y, Z). Aussi par la suite, le terme « supérieur » et le terme « inférieur » sont définis par rapport à l'axe Z orienté du bas vers le haut, c'est-à-dire, d'une position inférieure à une position supérieure. De même, le terme « avant » et le terme « arrière » sont définis par rapport à l'axe X orienté de l'arrière vers l'avant de l'aile 100.

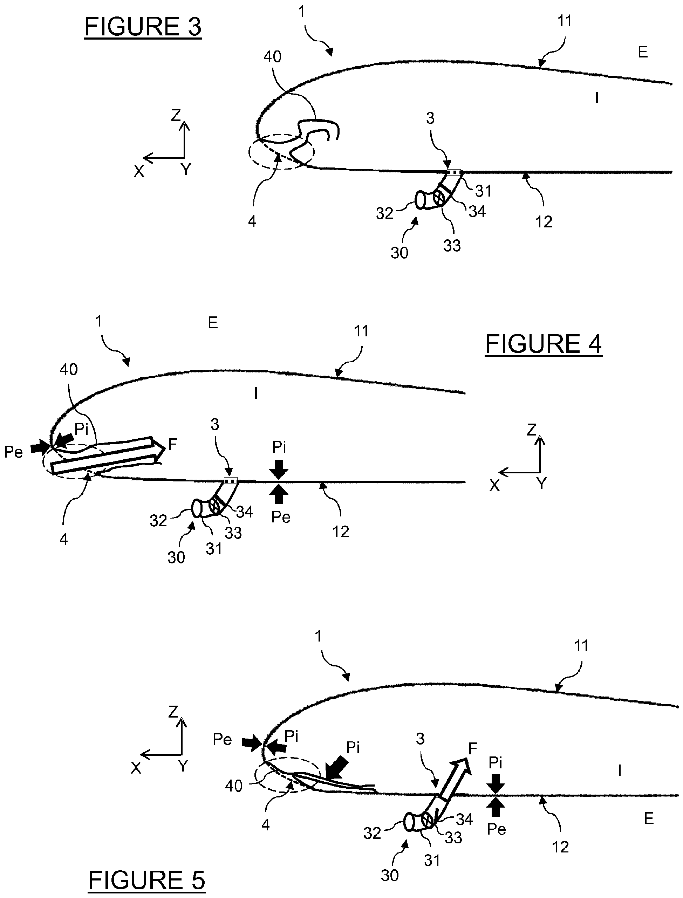

Comme indiqué précédemment, la voilure 1, de préférence en tissu, comprend une paroi supérieure 11, également désignée « extrados », et une paroi inférieure 12, également désignée « intrados », cousues ensemble à leurs extrémités de manière à ménager un espace à l'intérieur de la voilure 1, définissant un volume intérieur I (Figures 3-5). Les extrémités, pouvant être cousues, définissent à l'avant de la voilure 1, un bord d'attaque 13, premier bord à entrer en contact avec un flux d'air lorsque l'aile 100 est en mouvement, et à l'arrière, un bord de fuite 13F.

La paroi supérieure 11 et la paroi inférieure 12 sont également reliées par une pluralité de parois internes 14 transversales formant des cloisons de séparation, également désignés « nervures », qui délimitent une pluralité de caissons 15 internes. Afin de permettre une communication entre tous les caissons 15, chaque paroi interne 14 comprend au moins un orifice de passage 16, configuré pour permettre le passage d'un flux d'air.

Afin de permettre à l'aile 100 d'assurer sa fonction, chaque caisson 15 est gonflé de manière à ce que la pression intérieure Pi de la voilure 1 soit toujours supérieure à la pression extérieure appliquée sur les parois, c'est-à-dire supérieure à la pression statique autour de l'aile 100. Cette surpression est créée grâce à la pression dynamique appliquée par le vent sur le bord d'attaque 13 de l'aile 100. Une telle surpression permet de gonfler rigidement la voilure 1, permettant d'obtenir un profil aérodynamique compatible avec le vol de l'aile 100.

A cette fin, l'aile 100 comprend, selon l'invention, une entrée d'air active 3 et un dispositif de gonflage 30 actif, configuré pour injecter de l'air depuis l'extérieur E dans le volume intérieur I de la voilure 1. L'aile 100 comprend en outre une entrée d'air passive 4, configurée pour autoriser une circulation d'air depuis l'extérieur E dans le volume intérieur I de la voilure 1 et un dispositif anti-retour 40 configuré, d'une part, pour autoriser une circulation d'air depuis l'extérieur E vers le volume intérieur I de la voilure 1 via ladite entrée d'air passive 4 lorsque la pression intérieure Pi est inférieure à la pression extérieure Pe devant l'entrée d'air et, d'autre part, pour interdire une circulation d'air depuis le volume intérieur I de la voilure 1 vers l'extérieur E via ladite entrée d'air passive 4 lorsque la surpression est suffisante, c'est-à-dire supérieure à un seuil prédéterminé. Ainsi la voilure 1 est en toute circonstance gonflée à une pression intérieure Pi minimale, permettant à la fois le vol de la voilure 1 et son maniement aisé.

En effet, selon une forme de réalisation préférée de l'invention, comme représenté sur les figures 3, 4 et 5, la voilure 1 comprend une entrée d'air dite « active » 3, formée dans la paroi inférieure 12, et un dispositif de gonflage 30 configuré pour injecter de l'air dans ladite entrée d'air active 3. Un tel dispositif de gonflage 30 comprend un corps 31, de préférence, fixé sur une portion avant de la paroi inférieure 12, par exemple sous une première moitié avant, de manière à optimiser la circulation du flux d'air dans l'ensemble du volume intérieur I de la voilure 1. Le corps 31 du dispositif de gonflage 30 présente de préférence la forme d'un tube coudé, autrement dit la forme d'un « L », comportant une entrée d'air 32 se trouvant dans l'axe de la voilure 1, orientée vers l'avant de manière à se trouver face au vent et à être exposé à la pression extérieure Pe. Une telle entrée d'air 32 permet avantageusement de faciliter la prise d'air extérieur. La sortie du dispositif de gonflage 30 est fixée orthogonalement à la paroi inférieure 12, de manière à faciliter l'introduction du flux d'air à l'intérieur la voilure 1.

L'exemple présenté dans ce document décrit une entrée d'air active 3 formée dans la paroi inférieure 12, cependant il va de soi que l'entrée d'air active 3 pourrait tout aussi bien être intégrée au bord d'attaque 13 de la voilure 1.

Afin de permettre l'introduction d'un flux d'air dans la voilure 1 quelles que soient les conditions extérieures, par exemple quelle que soit la vitesse ou la force du vent, le dispositif de gonflage 30 comprend une soufflante 33 configurée pour aspirer un flux d'air depuis l'extérieur E vers le volume intérieur I de la voilure 1. Une telle soufflante 33, montée de préférence à l'intérieur du tube formant le corps 31, en aval de l'entrée d'air 32 du dispositif de gonflage 30, est configurée pour aspirer un débit d'air dont l'ordre de grandeur est compris entre 5 et 10 litres/s par m² de surface de voilure 1. Les orifices de passage 16 de chaque paroi interne 14 sont alors configurés pour permettre au flux d'air de s'engouffrer progressivement dans chaque caisson 15, permettant à l'aile 100 de se gonfler entièrement.

Selon une forme de réalisation préférée, la soufflante 33 comprend une hélice ou une roue mobile par exemple, dont la vitesse de rotation permet l'aspiration du flux d'air. Aussi, une telle soufflante 33 présente un premier sens de rotation, adapté pour injecter l'air depuis l'extérieur E dans les caissons 15 internes, permettant de gonfler la voilure 1. De même, la soufflante 33 est configurée pour être entrainée selon un deuxième sens de rotation, configuré pour prélever de l'air dans les caissons 15 internes et l'éjecter vers l'extérieur E, de manière à permettre le dégonflage de la voilure 1.

Afin de permettre le dégonflage de la voilure 1 au moyen de la soufflante 33, la surface intérieure de la paroi inférieure 12 comprend, selon un exemple de réalisation, une surépaisseur, désignée grille de drainage (non représentée), configurée pour limiter les risques de plaquage de la paroi supérieure 11 sur l'entrée d'air active 3, lorsque celle-ci est activée et génère un flux d'air sortant depuis le volume intérieur I de la voilure 1 vers l'extérieur E, aspirant la paroi supérieure 11. Une telle grille de drainage, perméable au passage d'un flux d'air, présente par exemple une épaisseur comprise entre 5 et 10 mm et est configurée pour résister à une différence de pression entre l'intérieur et l'extérieur comprise, de préférence, entre 100 et 500 Pa. Une telle grille de drainage permet ainsi d'assurer le passage d'un flux d'air depuis le volume intérieur I vers l'extérieur E de la voilure 1, même en cas de dégonflage rapide au moyen de la soufflante 33 de l'entrée d'air active 3. Grâce à la grille de drainage, l'entrée d'air active 3 ne peut pas être obturée par une paroi de la voilure 1 lors du dégonflage. La grille de drainage est placée sur une face interne de la paroi de l'aile 100 dans laquelle est formée l'entrée d'air active 3.

Selon une forme de réalisation, le dispositif de gonflage 30 comprend un clapet de sécurité 34, configuré pour empêcher l'air introduit dans la voilure 1 de s'échapper hors de la voilure 1 par l'entrée d'air active 3, lorsque le dispositif de gonflage 30 est inactif. Un tel clapet de sécurité 34 se présente par exemple sous la forme d'un clapet battant configuré pour évoluer entre une position de fermeture, dans laquelle le clapet de sécurité 34 obture l'entrée d'air active 3, et une position d'ouverture, dans laquelle le clapet de sécurité 34 n'obture pas l'entrée d'air active 3. Dans cet exemple, le clapet de sécurité 34, positionné par défaut dans sa position de fermeture, est intégré au corps 31 du dispositif de gonflage 30 en aval de la soufflante 33 (selon le sens de passage du flux d'air lorsque l'air traverse le dispositif de gonflage 30), de manière à permettre l'ouverture du clapet de sécurité 34 uniquement lorsque la soufflante 33 est active, c'est-à-dire uniquement lorsque la soufflante 33 aspire un flux d'air.

Le dispositif de gonflage 30 est dans cet exemple commandé électriquement, de manière à permettre son activation. Pour cela, comme représenté sur la figure 2, l'aile 100 comprend un module de commande 6, par exemple une carte électronique, configuré pour commander l'activation du dispositif de gonflage 30 et donc l'activation de la soufflante 33 dans le premier sens de rotation ou le deuxième sens de rotation de manière à commander le gonflage ou le dégonflage de la voilure 1. Un tel module de commande 6 peut, dans une solution alternative, commander également l'ouverture et la fermeture du clapet de sécurité 34.

Le module de commande 6 précité permet, dans cet exemple, l'alimentation électrique du dispositif de gonflage 30 de la voilure 1. En effet, le dispositif de gonflage 30 est relié par exemple au module de commande 6 au moyen d'un câble 60 de connexion électrique, ainsi, le dispositif de gonflage 30 est aisément alimenté et/ou commandé électriquement par le module de commande 6. Dans cet exemple, le module de commande 6 est relié électroniquement au dispositif de contrôle 5 du vol. Il va de soi que le module de commande 6 pourrait être intégré à un élément différent de l'aile 100, par exemple, intégré au dispositif de contrôle 5 du vol. A titre d'exemple, le module de commande 6 pourrait être directement intégré au dispositif de gonflage 30 ou à la voilure 1.

La voilure 1 comprend dans cet exemple une unique entrée d'air active 3, cependant il va de soi que la voilure 1 pourrait tout aussi bien comprendre une pluralité d'entrées d'air actives 3, comprenant chacune un dispositif de gonflage 30. Cela est particulièrement avantageux lorsque la voilure 1 comporte une pluralité de volumes indépendants. De plus, chaque entrée d'air active 3 pouvant également remplir la fonction d'une entrée d'air passive 4 lorsque le dispositif de gonflage 30 n'est pas actif, la pluralité d'entrées d'air actives 3 permet également d'augmenter le débit d'air permettant un gonflage passif de la voilure 1, comme cela sera décrit plus en détails par la suite.

Chaque dispositif de gonflage 30 serait alors relié fluidiquement par la paroi inférieure 12 à un volume indépendant, de manière à permettre le gonflage indépendant d'une pluralité de zones de la voilure 1. Dans cet exemple alternatif, chaque dispositif de gonflage 30 comprendrait un module de commande 6 propre, de manière à commander individuellement chaque dispositif de gonflage 30. La voilure 1 pourrait également comprendre un unique module de commande 6 configuré pour commander individuellement l'ensemble des dispositifs de gonflage 30.

Une telle pluralité de dispositifs de gonflage 30 permet avantageusement de gonfler une zone de la voilure 1 à une pression supérieure, de manière à modifier la forme de l'aile 100. Un gonflage supérieur sur une portion latérale de la voilure 1 permet de piloter la trajectoire de l'aile 100, par exemple en générant un moment de roulis, permettant d'incliner l'aile 100, dans le but de la faire changer de direction par exemple. Autrement dit, le comportement de l'aile 100 peut être modifié en adaptant la pression intérieure Pi des différents volumes de la voilure 1. En effet, une modification dissymétrique de la forme de l'aile 100 entre une partie droite et une partie gauche de l'aile 100 génère une portance différente entre une telle partie droite et une telle partie gauche, permettant de générer le moment de roulis permettant une mise en virage de l'aile 100.

L'association du dispositif de gonflage 30 au clapet de sécurité 34 permet avantageusement de gonfler rapidement la voilure 1 et de maintenir une pression intérieure Pi qui est supérieure à la pression extérieure Pe, assurant le vol de l'aile 100.

En référence à la figure 2, la voilure 1 comporte une entrée d'air passive 4 se présentant de préférence sous la forme d'une ouverture intégrée directement au bord d'attaque 13 de la voilure 1 et configurée pour autoriser la circulation d'un flux d'air depuis l'extérieur E vers le volume intérieur I de la voilure 1. La présence d'une telle ouverture directement sur le bord d'attaque 13 de la voilure 1 permet une exposition directe au vent de manière à gonfler le volume intérieur I de la voilure 1. En outre, les orifices de passage 16 de chaque paroi interne 14 sont configurés pour permettre au flux d'air de s'introduire progressivement dans chaque caisson 15, permettant à l'aile 100 de se gonfler entièrement. Aussi, lorsque l'aile 100 est en mouvement, la vitesse de la voilure 1 permet l'introduction directe d'un flux d'air à l'intérieur de la voilure 1, un vent fort permettant un gonflage plus rapide de la voilure 1 par l'entrée d'air passive 4. Cette entrée d'air est dite « passive » 4 car elle est gonflée naturellement, par la pression statique régnant autour de l'aile 100 associée à la pression dynamique générée par la vitesse de l'air, sans élément nécessitant d'être alimenté à l'inverse d'une entrée d'air « active » 3.

Une entrée d'air passive 4 permet de gonfler la voilure 1 de manière naturelle et économique. En outre, elle permet de gonfler la voilure 1 en cas de dysfonctionnement du dispositif de gonflage 30. La fiabilité et la sécurité sont alors augmentées.

Aussi, en cas de vent faible ou de gonflage actif, afin d'empêcher l'air de s'échapper par l'entrée d'air passive 4, cette dernière comprend, en référence à la figure 3, un dispositif anti-retour 40, configuré pour empêcher une circulation d'air depuis le volume intérieur I de la voilure 1 vers l'extérieur E via l'entrée d'air passive 4. Plus précisément, le dispositif anti-retour 40 permet d'obturer l'entrée d'air passive 4 lorsque la surpression à l'intérieur de la voilure 1 par rapport à l'extérieur E est suffisante, c'est-à-dire lorsque la surpression est supérieure à la pression devant l'entrée d'air.

De manière incidente, on connaît dans l'art antérieur, par le document EP 1207102 A2, une aile à caissons comprenant un clapet anti-retour, configuré pour s'ouvrir et se fermer en fonction de la pression régnant de part et d'autre du clapet. Cependant, le clapet décrit dans le document EP 1207102 A2 présente une forme et des dimensions ne permettant pas d'obturer de manière optimale l'intégralité de l'entrée d'air. En effet, lorsque la différence de pression entre l'intérieur et l'extérieur est très élevée par exemple, le clapet rectangulaire peut être aspiré hors de la voilure ou mal se positionné, auquel cas il peut ne pas être plaqué de manière à recouvrir l'intégralité de l'entrée d'air. Aussi l'entrée d'air peut ne pas être entièrement obturée, ce qui présente un inconvénient.

En référence à la figure 3, le dispositif anti-retour 40 selon l'invention se présente sous la forme d'un manchon réalisé dans un matériau souple, de manière à pouvoir être déformé, qui s'étend à l'intérieur de la voilure 1, de manière à obturer l'entrée d'air passive 4, permettant d'éviter tout échappement d'air. Dans une forme de réalisation, le manchon est en tissu et issu de matière des parois supérieure 11 et inférieure 12, de manière à pouvoir être intégré directement à la voilure 1 lors de sa confection. Un tel manchon, issu de matière de la voilure 1, permet une liaison homogène, limitant les discontinuités pouvant être source de turbulences du flux d'air. De manière alternative, le manchon pourrait également être rapporté et cousu au niveau de l'entrée d'air passive 4.

L'ouverture de l'entrée d'air passive 4 présente une section de passage définissant une largeur correspondant à la plus grande dimension de la section. A titre d'exemple, dans le cas d'une ouverture circulaire, la largeur correspond au diamètre de la section de l'ouverture. Aussi, le manchon du dispositif anti-retour 40 présente, de manière préférée, une longueur strictement supérieure à la plus grande dimension de l'ouverture, de manière à permettre le recouvrement total de la section de passage. De manière préférée, en pratique, le manchon présente une longueur supérieure à deux fois la plus grande dimension de la section de passage, de manière à limiter tout risque de fuite par l'entrée d'air passive 4.

En effet, en référence aux figures 3 à 5, le dispositif anti-retour 40 est configuré pour être déformé sous l'effet de la pression. La figure 3 illustre la voilure 1 comprenant un dispositif anti-retour 40 souple se trouvant dans un état de repos, par exemple lorsque la voilure 1 n'est pas exposée au vent ou en cas de vent faible.

Lorsque la pression extérieure Pe devant l'entrée d'air est supérieure à la pression intérieure Pi (phase de gonflage au vent), comme cela est représenté sur la figure 4, le dispositif anti-retour 40 est configuré pour autoriser le passage d'un flux d'air F par le manchon, de manière à gonfler la voilure 1. A cet effet, le manchon s'étend sensiblement longitudinalement selon la direction du flux d'air F.

Lorsque la pression intérieure Pi est supérieure à la pression extérieure Pe (phase dans laquelle la paroi est gonflée rigidement et dans laquelle l'air ne peut entrer à l'intérieur de la voilure 1 par l'entrée d'air passive 4), comme cela est représenté sur la figure 5, le dispositif anti-retour 40 est configuré pour être plaqué à l'intérieur de la voilure 1 sur la paroi inférieure 12 (ou la paroi supérieure 11), de manière à empêcher le passage d'un flux d'air au travers du manchon, en obturant l'ouverture de l'entrée d'air passive 4.

Le dispositif anti-retour 40 selon l'invention permet avantageusement de limiter les fuites d'air à la fois lorsque le dispositif de gonflage 30 est en fonctionnement et lorsque les vents appliqués sur l'aile 100 sont faibles. Le dispositif anti-retour 40 est passif et permet de se déformer en fonction des conditions de pression.

Dans cet exemple, la voilure 1 comprend une unique entrée d'air passive 4, cependant il va de soi que la voilure 1 pourrait comprendre une pluralité d'entrées d'air passives 4, auquel cas, chaque entrée d'air passive 4 sera associée à un dispositif anti-retour 40, de manière à empêcher tout échappement d'air par les ouvertures des entrées d'air passives 4. Cela est particulièrement avantageux lorsque la voilure 1 comporte une pluralité de volumes indépendants, chaque volume indépendant pourrait comprendre une ou plusieurs entrée(s) d'air passive(s) 4.

Selon une forme de réalisation, comme décrit précédemment, chaque entrée d'air active 3 peut également remplir la fonction d'une entrée d'air passive 4 décrite ci-dessus. En effet, lorsque le dispositif de gonflage 30 n'est pas actif, l'entrée d'air active 3 permet également d'augmenter le débit d'air permettant un gonflage passif de la voilure 1, notamment au cours de la phase de gonflage initial de la voilure 1.

Aussi, dans un exemple de réalisation, l'entrée d'air passive 4 est associée à l'entrée d'air active 3 notamment au cours de la phase de gonflage de la voilure 1, c'est-à-dire lorsque cette dernière est dépliée et exposée face au vent en vue d'être gonfler, de manière à être mise en vol. En effet, lorsque la voilure 1 est exposée face au vent, l'entrée d'air passive 4 permet l'introduction passive d'un flux d'air.

Selon une forme de réalisation préférée de l'invention, la voilure 1 comprend également des moyens de mesure de pression (non représentés), configurés pour mesurer la pression intérieure Pi du volume intérieur I et la pression extérieure Pe de l'extérieur E. Pour cela, les moyens de mesure comprennent, dans cet exemple, un premier capteur de pression, configuré pour mesurer la pression à l'intérieur de la voilure 1, et un deuxième capteur de pression, configuré pour mesurer la pression à l'extérieur E de la voilure 1. De tels capteurs de pression sont de préférence reliés électriquement au module de commande 6. La mesure des pressions permet de s'assurer que la pression intérieure Pi est suffisamment importante pour assurer un gonflage rigide de la voilure 1 et de garantir un profil aérodynamique. En effet, une surpression à l'intérieur de la voilure 1 par rapport à l'extérieur E permet de garantir la forme nécessaire au vol de la voilure 1 ainsi que sa maniabilité. Pour cela, le module de commande 6 de l'aile 100 est, dans cet exemple, configuré pour activer la soufflante 33 du dispositif de gonflage 30 lorsque la surpression entre le volume intérieur I et l'extérieur E de la voilure 1 est inférieure ou égale à un seuil de pression prédéterminé. Un tel seuil de pression prédéterminé est par exemple de 200 Pa, de manière à garantir une surpression à l'intérieur de la voilure 1 quelles que soient les conditions extérieures. Il va de soi qu'un seuil de pression variable pourrait également être utilisé, notamment en fonction de la vitesse du vent.

De manière similaire, selon une forme de réalisation, le module de commande 6 est programmé afin d'ajuster la vitesse de rotation de la soufflante 33 du dispositif de gonflage 30 en fonction de la pression intérieure Pi et la pression extérieure Pe. La régulation de la vitesse de rotation de la soufflante 33 permet ainsi de réguler la surpression dans le volume intérieur I de l'aile 100.

De plus, une corrélation entre le débit d'air fourni par le dispositif de gonflage 30 et la surpression régnant à l'intérieur de la voilure 1 permet de renseigner sur le niveau de fuite externe de l'aile 100. En effet, une fuite externe excessive est de manière connue représentative d'une usure de l'aile 100. Ainsi, le module de commande 6 permet avantageusement de détecter une usure de la voilure 1 nécessitant soit une réparation soit un remplacement de l'aile 100.

Dans cet exemple, en cas de présence d'une pluralité de dispositifs de gonflage 30, la voilure 1 comprend de préférence une pluralité de capteurs de pression, configurés chacun pour permettre via le module de commande 6 d'activer une ou plusieurs soufflante(s) 33 d'un ou plusieurs dispositif(s) de gonflage 30. De manière alternative, en cas de présence d'une pluralité de dispositifs de gonflage 30, permettant chacun le gonflage d'un volume indépendant différent de la voilure 1 et comprenant chacun un module de commande 6, chaque module de commande 6 est associé à un capteur de pression différent. Aussi, le gonflage de chaque volume indépendant de la voilure 1 est commandé individuellement en fonction de la pression régnant dans chaque volume.

Selon une forme alternative de réalisation, les moyens de mesure se présentent sous la forme d'un unique capteur de mesure de la différence de pression entre le volume intérieur I et l'extérieur E de la voilure 1. Un tel capteur de mesure de la différence de pression se présente par exemple sous la forme d'un piston configuré pour permettre une lecture directe de la différence de pression entre l'intérieur et l'extérieur E de la voilure 1 et est ainsi configuré pour transmettre directement une telle valeur de différence de pression au module de commande 6.

De même, cet exemple présente le cas de moyens de mesure comprenant un unique capteur de pression, configuré pour mesuré une pression intérieure Pi, et un unique capteur de pression, configuré pour mesurer une pression extérieure Pe, cependant il va de soi que l'aile 100 pourrait comprendre une pluralité de couples de capteurs de mesure de pression intérieure Pi et de capteurs de mesure de pression extérieure Pe. Chaque couple de capteurs de mesure pourrait être configuré pour permettre via le module de commande 6 d'activer indépendamment une ou plusieurs soufflante(s) 33 d'un ou plusieurs dispositif(s) de gonflage 30 de manière par exemple à ajuster le gonflage dans chaque caisson 15 de la voilure 1.

Dans un exemple de réalisation, la voilure 1 comprend en outre un ou plusieurs orifices d'échappement (non représentés) configurés pour accélérer le dégonflage de l'aile 100. Les orifices d'échappement, chacun associé à un clapet obturateur, sont par exemple répartis sur la surface des parois 11, 12 de la voilure 1. De tels clapets obturateurs sont configurés pour être ouverts lors de la phase de dégonflage de la voilure 1. Dans cet exemple, le module de commande 6 peut être en outre configuré pour ouvrir chaque clapet obturateur de manière à permettre l'évacuation de l'air depuis le volume intérieur I vers l'extérieur E de la voilure 1 afin de dégonfler l'aile 100.

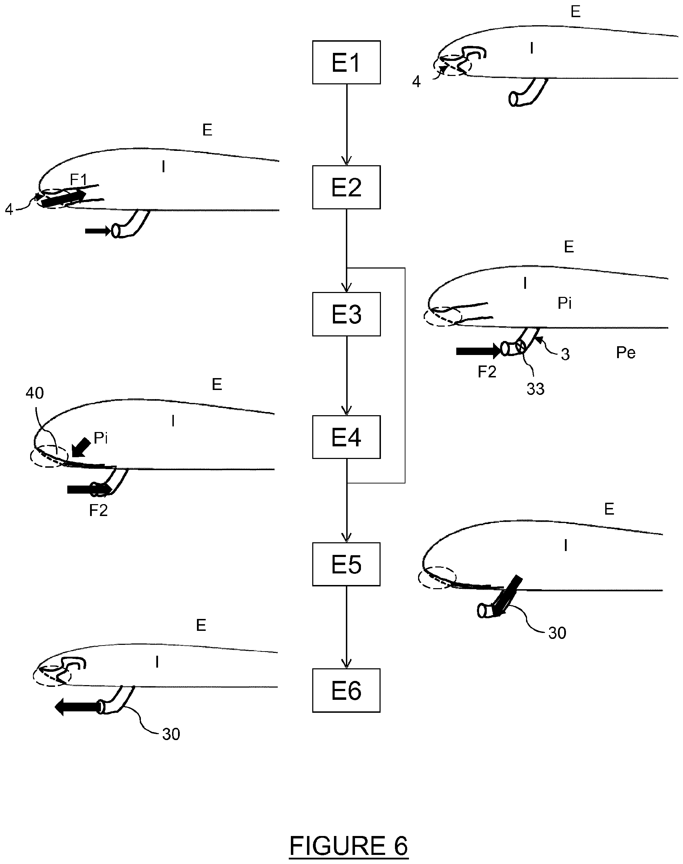

En référence à la figure 6, il va dorénavant être décrit un procédé de gonflage d'une aile 100 selon l'invention telle que décrite précédemment. Dans cet exemple, une telle aile 100 est configurée pour permettre la traction d'un bateau 300.

Dans une première étape E1, la voilure 1 de l'aile 100 souple est déployée, de manière à présenter l'entrée d'air passive 4 face au vent. Puis, dans une deuxième étape E2, un premier flux d'air F1 s'introduit dans l'entrée d'air passive 4, de manière à commencer le gonflage de la voilure 1. Dans cette étape E2, l'entrée d'air active 3 dont le dispositif de gonflage 30 n'est pas activé, rempli également le rôle d'une entrée d'air passive 4. A ce titre, l'entrée d'air active 3 permet également l'introduction passive d'un flux d'air, de manière à permettre le gonflage de la voilure 1 jusqu'à la pression extérieure Pe devant l'entrée d'air. La pression intérieure Pi est alors limitée à une telle pression extérieure Pe.

Aussi, si la pression intérieure Pi n'est pas assez importante, par exemple du fait d'une pression dynamique faible du premier flux d'air F1, le module de commande 6 active, dans une troisième étape E3, la soufflante 33 du dispositif de gonflage 30 de l'entrée d'air active 3 selon le premier sens de rotation, de manière à introduire un deuxième flux d'air F2 dans la voilure 1. Un tel deuxième flux d'air F2 permet d'augmenter la vitesse de gonflage et ainsi la pression intérieure Pi.

Autrement dit, au cours d'une telle phase de gonflage initial, l'entrée d'air passive 4 et l'entrée d'air active 3, dont le dispositif de gonflage 30 n'est pas activé, sont exposées face au vent sous la pression extérieure Pe, de manière à permettre le gonflage passif de la voilure 1 jusqu'à la pression extérieure Pe. A titre d'exemple, dans le cas d'un vent soufflant à une vitesse de 10 m/s, la voilure 1 est gonflée passivement jusqu'à atteindre une surpression de l'ordre de 60 Pa. Lorsque la surpression est trop faible, le module de commande 6 active le dispositif de gonflage 30 de manière à permettre un gonflage actif permettant une augmentation de la pression intérieure Pi. Une telle surpression permet avantageusement de gonfler rigidement la voilure 1 de manière à permettre son envol. Lorsque la surpression est suffisante, par exemple supérieure à un seuil compris entre 200 et 400 Pa, le dispositif de gonflage 30 de l'entrée d'air active 3 est configuré pour être désactivé.

Lorsque la pression intérieure Pi devient supérieure à la pression extérieure Pe devant l'entrée d'air passive 4, le dispositif anti-retour 40 de l'entrée d'air passive 4 est plaqué, dans une quatrième étape E4, sur une face intérieure d'une paroi 11, 12 de l'aile 100 au niveau de l'entrée d'air passive 4, de manière à en obturer l'ouverture. Ainsi, la voilure 1 est gonflée rigidement par l'entrée d'air active 3. En effet, lorsque la pression intérieure Pi, supérieure à la pression extérieure Pe, est suffisante, la voilure 1 est gonflée et devient assez rigide pour pouvoir voler. La voilure 1 peut ainsi générer une portance qui lui permet de s'élever puis de tracter le bateau 300. Un tel gonflage au moyen de l'entrée d'air active 3 est particulièrement avantageux lors du lancement de la l'aile 100, phase au cours de laquelle les vents appliqués sur la voilure 1 sont faibles.

Lorsque la surpression à l'intérieur de la voilure 1 est inférieure à un seuil prédéterminé, par exemple 200 Pa, le dispositif de gonflage 30 est activé par le module de commande 6 de manière à introduire un nouveau flux d'air dans la voilure 1. A cet effet, les étapes E3 et E4 du procédé précédemment décrites sont répétées, de manière à maintenir la voilure 1 suffisamment gonflée pour permettre le vol de l'aile 100, permettant la traction du bateau 300 auquel elle est reliée.

Lorsque la vitesse du vent est suffisante, le dispositif de gonflage 30 est désactivé et la voilure 1 est gonflée de manière passive via son entrée d'air passive 4 et via l'entrée d'air active 3, dont le dispositif de gonflage 30 désactivé confère à l'entrée d'air active 3 la fonction d'entrée d'air passive 4. En effet, l'entrée d'air active 3 est orientée face au flux d'air, permettant l'introduction passive d'un flux d'air.

Dans un second temps, lorsque la traction du bateau 300 n'est plus nécessaire, l'aile 100 doit être récupérée et pliée. Lors de la phase de récupération, l'aile 100 doit être suffisamment gonflée pour pouvoir être contrôlée. A cet effet, de manière analogue à la phase de lancement, le dispositif de gonflage 30 est de manière avantageuse activé.

Pour permettre un pliage optimal, la voilure 1 est dégonflée dans une cinquième étape E5. Pour cela, si l'entrée d'air active 3 est pourvue d'un clapet de sécurité 34, le module de commande 6 commande son ouverture de manière à dégonfler l'aile 100. Dans le cas de la présence d'un clapet de sécurité commandable placé sur la voilure 1, hors de l'entrée d'air active 3, le module de commande 6 peut également ou de manière alternative commander un tel clapet de sécurité.

Afin d'accélérer le dégonflage, dans cette étape E5, le module de commande 6 active la soufflante 33 du dispositif de gonflage 30 selon le deuxième sens de rotation, entrainant une baisse de la pression intérieure Pi de la voilure 1. La baisse de la pression intérieure Pi permet ainsi dans une sixième étape E6, d'assurer le dégonflage de la voilure 1. L'utilisation d'un grillage de drainage permet avantageusement un dégonflage optimal et rapide.

Grâce à la voilure 1 selon l'invention, une aile 100 peut être gonflée de manière pratique, rapide et économique en fonction des conditions de vent afin d'assurer un gonflage sûr de l'aile 100.

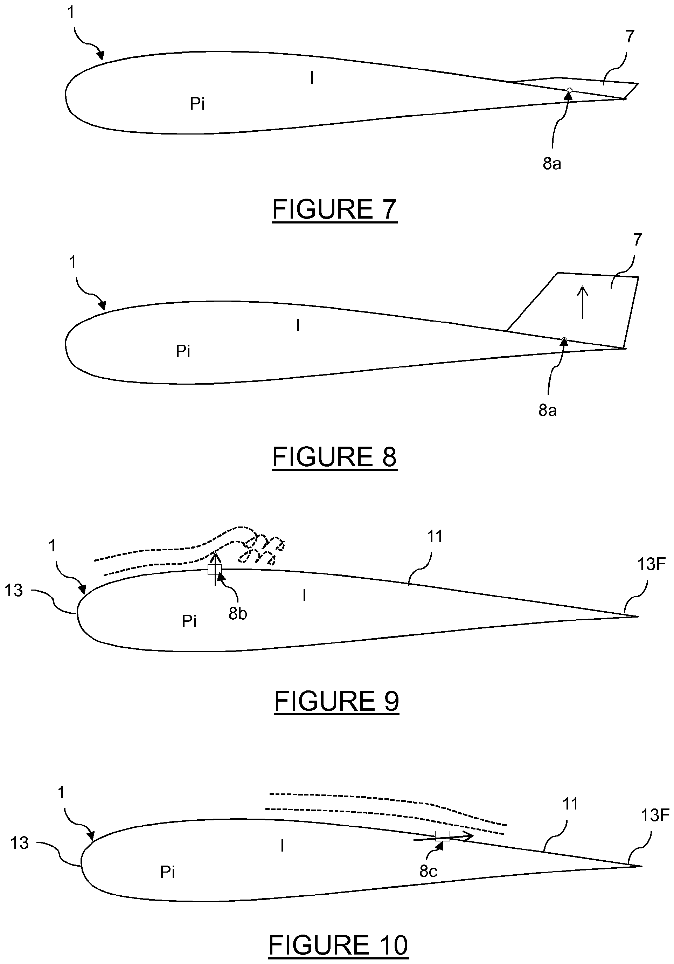

Selon une forme de réalisation de l'invention, en référence aux figures 7 et 8, la voilure 1 comprend un appendice 7, volume indépendant, relié au volume intérieur I de la voilure 1 par l'intermédiaire d'un premier clapet 8a commandable. Dans cet exemple, le premier clapet 8a commandable est relié électriquement au module de commande 6 afin de l'ouvrir ou de le fermer en cas de besoin.

Lorsque le premier clapet 8a est fermé, seul le volume intérieur I de la voilure 1 est gonflé. Pour améliorer l'orientation de l'aile 100, le module de commande 6 commande en ouverture le premier clapet 8a, ce qui permet une circulation d'air dans l'appendice 7 comme illustré à la figure 8 afin de le gonfler.

Dans un autre exemple de réalisation, l'appendice 7 peut comprendre un dispositif de gonflage 30 dédié, permettant de gonfler l'appendice 7 avec l'air extérieur. Le dispositif de gonflage 30 dédié peut alors être relié au module de commande 6 de manière à permettre le gonflage ou le dégonflage de l'appendice 7 suivant le besoin.

De manière avantageuse, l'appendice 7 se présente sous la forme d'une dérive qui permet l'orientation de l'aile 100 à la manière d'une girouette. L'utilisation d'un dispositif de gonflage 30 avec un tel appendice 7 permet d'améliorer le contrôle du déplacement de l'aile 100, ce qui améliore la traction.

Selon une forme de réalisation de l'invention, en référence aux figures 9 et 10, afin de modifier l'écoulement aérodynamique sur la paroi supérieure 11, par exemple en vue de modifier la portance de l'aile 100, la voilure 1 comporte au niveau de sa paroi supérieure 11 un deuxième clapet commandable 8b et un troisième clapet commandable 8c configurés pour éjecter un flux d'air depuis le volume intérieur I vers l'extérieur E afin de modifier la circulation d'air sur la paroi supérieure 11. Dans cet exemple, les clapets commandables 8b, 8c sont reliés électriquement au module de commande 6 afin de les ouvrir ou de les fermer en cas de besoin.

En référence à la figure 9, le deuxième clapet commandable 8b est positionné à proximité du bord d'attaque 13 et permet de perturber l'écoulement sur la paroi supérieure 11 et ainsi diminuer la portance de l'aile 100. De manière analogue, en référence à la figure 10, le troisième clapet commandable 8c est positionné à proximité du bord de fuite 13F et permet de recoller l'écoulement sur la paroi supérieure 11 et ainsi augmenter la portance de l'aile 100.

L'aile selon l'invention permet avantageusement au moyen d'une pluralité d'entrées d'air de contrôler la pression dans le volume intérieur de la voilure, de manière à permettre son contrôle et à faciliter sa manipulation. Une telle aile permet en effet à la fois un gonflage et un dégonflage rapide au moyen d'une pluralité d'entrées d'air actives ou passives disposées en différents points de la voilure. Le contrôle de la surpression intérieure permet avantageusement de limiter les risques de dégonflage permettant de limiter les modifications de la forme de l'aile dues aux conditions climatiques. Aussi, une telle aile est toujours gonflée rigidement à une pression suffisante pour assurer une portance fiable de l'aile et une traction efficace du bateau.

L'aile selon l'invention est décrite dans ce document dans le cadre de la traction d'un bateau, cependant, il va de soi qu'une telle aile pourrait tout aussi bien être utilisée en vue d'autres applications. A titre d'exemple, la puissance de l'aile pourrait être utilisée afin de produire de l'énergie électrique. En effet, une puissance électrique peut être produite lorsque le câble de traction 9 est d'une part relié à l'aile et d'autre part enroulé autour d'un tambour d'un treuil, un tel treuil entrainant lui-même un générateur électrique.

Un tel générateur fonctionne, c'est-à-dire produit de l'énergie, lorsque l'aile entraine le câble de traction pendant la phase de lancement et entraine ainsi en rotation le tambour du treuil et le générateur électrique. Lorsque la totalité du câble de traction a été déroulée, l'aile est manoeuvrée de manière à être positionnée au zénith du treuil, de manière à ce que celle-ci produise le moins d'effort possible sur le câble de traction. Le câble peut ainsi aisément être enroulé à nouveau autour du tambour du treuil, par exemple par l'actionnement d'un moteur électrique ou bien par le générateur électrique utilisé en mode moteur. Une fois le câble de traction enroulé autour du tambour du treuil, l'aile repart en vol en entrainant le câble de traction, entrainant ainsi en rotation le tambour du treuil. L'aile active ainsi le générateur électrique, permettant de produire de l'énergie électrique.

## Revendications

1. Aile (100) souple s'étendant longitudinalement selon un axe (X) et comprenant une voilure (1) et une pluralité de suspentes (2) reliées à la voilure (1), ladite voilure (1) comprenant une paroi supérieure (11) et une paroi inférieure (12), définissant un volume intérieur (I) ayant une pression intérieure (Pi), au moins une entrée d'air active (3) orientée vers l'avant selon ledit axe (X) et au moins un dispositif de gonflage (30) actif dans lequel est monté une soufflante (33) configuré pour injecter de l'air depuis l'extérieur (E), ayant une pression extérieure (Pe), dans le volume intérieur (I) de la voilure (1) via l'entrée d'air active (3), aile (100) **caractérisée en ce que** la voilure (1) comprend au moins une entrée d'air passive (4), configurée pour autoriser une circulation d'air depuis l'extérieur (E) dans le volume intérieur (I) de la voilure (1) et au moins un dispositif anti-retour (40) configuré, d'une part, pour autoriser une circulation d'air depuis l'extérieur (E) vers le volume intérieur (I) de la voilure (1) via ladite entrée d'air passive (4) lorsque la pression intérieure (Pi) est inférieure à la pression extérieure (Pe) devant l'entrée d'air passive (4) et, d'autre part, pour interdire une circulation d'air depuis le volume intérieur (I) de la voilure (1) vers l'extérieur (E) via ladite entrée d'air passive (4) lorsque la pression intérieure (Pi) est supérieure à la pression extérieure (Pe) devant l'entrée d'air passive (4).

2. Aile (100) selon la revendication 1, dans laquelle le dispositif anti-retour (40) se présente sous la forme d'un manchon.

3. Aile (100) selon l'une des revendications 1 et 2, dans laquelle le dispositif de gonflage (30) comprend un clapet de sécurité (34), configuré pour limiter le passage d'un flux d'air par l'entrée d'air active (3) vers l'extérieur (E).

4. Aile (100) selon l'une des revendications 1 à 3, dans laquelle, la soufflante (33) est configurée, d'une part, pour tourner selon un premier sens de rotation afin de gonfler le volume intérieur (I) de la voilure (1) et, d'autre part, pour tourner selon un deuxième sens de rotation afin de dégonfler le volume intérieur (I) de la voilure (1).

5. Aile (100) selon l'une des revendications 1 à 4, comprenant un module de commande (6) configuré pour activer la soufflante (33) du dispositif de gonflage (30).

6. Aile (100) selon la revendication 5, comprenant des moyens de mesure de la pression intérieure (Pi) et de la pression extérieure (Pe) de manière à déterminer une surpression, reliés au module de commande (6), le module de commande (6) du dispositif de gonflage (30) est configuré pour activer la soufflante (33) du dispositif de gonflage (30) lorsque la surpression est inférieure ou égale à un seuil prédéterminé.

7. Aile (100) selon la revendication 6, dans laquelle, ladite soufflante (33) du dispositif de gonflage (30) présentant une vitesse de rotation, le module de commande (6) du dispositif de gonflage (30) est configuré pour réguler la vitesse de rotation de la soufflante (33), de manière à maintenir une surpression dans le volume intérieur (I) de la voilure (1), mesurée par les moyens de mesure de pression, à une valeur prédéterminée.

8. Aile (100) selon l'une des revendications 1 à 7, dans laquelle, la voilure (1) comportant une pluralité de volumes indépendants, chaque volume indépendant comprend au moins une entrée d'air passive (4) associée à un dispositif anti-retour (40).

9. Aile (100) selon l'une des revendications 1 à 8, comprenant une pluralité d'entrées d'air actives (3), comprenant chacune un dispositif de gonflage (30), chaque dispositif de gonflage (30) étant configuré pour être commandé de manière à permettre le gonflage ou le dégonflage uniquement d'une partie de la voilure (1).

10. Aile (100) selon l'une des revendications 1 à 9, comprenant un dispositif de contrôle (5), relié aux suspentes (2), configuré pour tirer/relâcher sur une ou plusieurs suspentes (2).

11. Aile (100) selon la revendication 5 et la revendication 10, dans lequel le module de commande (6) est relié électroniquement au dispositif de contrôle (5).

12. Aile (100) selon la revendication 11, dans lequel le module de commande (6) et le dispositif de contrôle (5) appartiennent à une même unité fonctionnelle.

13. Bateau (300) comprenant au moins un organe d'accroche (301) et une aile (100) selon l'une des revendications 1 à 12 reliée audit organe d'accroche (301) afin de permettre la traction du bateau (300).

14. Procédé de gonflage d'une aile (100) selon l'une des revendications 1 à 12, ledit procédé comprenant les étapes de :
- déploiement de la voilure (1) de manière à positionner l'entrée d'air passive (4) face au vent afin de gonfler la voilure (1) de manière passive,
- lorsque le gonflage est insuffisant, activation du dispositif de gonflage (30) afin de gonfler la voilure (1) de manière active,
- fermeture du dispositif anti-retour (40) lorsque la pression intérieure (Pi) est supérieure à la pression extérieure (Pe) devant l'entrée d'air passive (4).

## Patentansprüche

1. Flexibler Flügel (100), der sich längs gemäß einer Achse (X) erstreckt und eine Tragfläche (1) und eine Vielzahl von Leinen (2), die mit der Tragfläche (1) verbunden sind, beinhaltet, wobei die Tragfläche (1) eine obere Wand (11) und eine untere Wand (12), die ein Innenvolumen (I), das einen Innendruck (Pi) aufweist, definieren, mindestens einen aktiven Lufteinlass (3), der gemäß der Achse (X) nach vorne gerichtet ist, und mindestens eine aktive Aufblasvorrichtung (30), in der ein Gebläse (33) montiert ist und die dazu konfiguriert ist, Luft von der Außenseite (E), die einen Außendruck (Pe) aufweist, über den aktiven Lufteinlass (3) in das Innenvolumen (I) der Tragfläche (1) einzuleiten, beinhaltet, wobei der Flügel (100) **dadurch gekennzeichnet ist, dass** die Tragfläche (1) mindestens einen passiven Lufteinlass (4), der dazu konfiguriert ist, eine Luftzirkulation von der Außenseite (E) in das Innenvolumen (I) der Tragfläche (1) zu gestatten, und mindestens eine Rückschlagvorrichtung (40) beinhaltet, welche dazu konfiguriert ist, einerseits eine Luftzirkulation von der Außenseite (E) zu dem Innenvolumen (I) der Tragfläche (1) durch den passiven Lufteinlass (4) zu gestatten, wenn der Innendruck (Pi) kleiner als der Außendruck (Pe) vor dem passiven Lufteinlass (4) ist, und andererseits eine Luftzirkulation von dem Innenvolumen (I) der Tragfläche (1) zu der Außenseite (E) durch den passiven Lufteinlass (4) zu unterbinden, wenn der Innendruck (Pi) größer als der Außendruck (Pe) vor dem passiven Lufteinlass (4) ist.

2. Flügel (100) nach Anspruch 1, wobei die Rückschlagvorrichtung (40) die Form eines Stutzens aufweist.

3. Flügel (100) nach einem der Ansprüche 1 und 2, wobei die Aufblasvorrichtung (30) ein Sicherheitsventil (34) beinhaltet, das dazu konfiguriert ist, den Durchgang eines Luftstroms durch den aktiven Lufteinlass (3) zu der Außenseite (E) zu begrenzen.

4. Flügel (100) nach einem der Ansprüche 1 bis 3, wobei das Gebläse (33) dazu konfiguriert ist, sich einerseits gemäß einer ersten Drehrichtung zu drehen, um das Innenvolumen (I) der Tragfläche (1) aufzublasen, und sich andererseits gemäß einer zweiten Drehrichtung zu drehen, um das Innenvolumen (I) der Tragfläche (1) zu entleeren.

5. Flügel (100) nach einem der Ansprüche 1 bis 4, der ein Steuermodul (6) beinhaltet, das dazu konfiguriert ist, das Gebläse (33) der Aufblasvorrichtung (30) zu aktivieren.

6. Flügel (100) nach Anspruch 5, der Mittel zum Messen den Innendrucks (Pi) und des Außendrucks (Pe) beinhaltet, um einen Überdruck zu bestimmen, die mit dem Steuermodul (6) verbunden sind, wobei das Steuermodul (6) der Aufblasvorrichtung (30) dazu konfiguriert ist, das Gebläse (33) der Aufblasvorrichtung (30) zu aktivieren, wenn der Überdruck kleiner als oder gleich einem vorbestimmten Schwellenwert ist.

7. Flügel (100) nach Anspruch 6, wobei das Gebläse (33) der Aufblasvorrichtung (30) eine Drehzahl aufweist, wobei das Steuermodul (6) der Aufblasvorrichtung (30) dazu konfiguriert ist, die Drehzahl des Gebläses (33) so zu regeln, dass ein Überdruck in dem Innenvolumen (I) der Tragfläche (1), der durch die Druckmessmittel gemessen wird, auf einem vorbestimmten Wert gehalten wird.

8. Flügel (100) nach einem der Ansprüche 1 bis 7, wobei die Tragfläche (1) eine Vielzahl von unabhängigen Volumina umfasst, wobei jedes unabhängige Volumen mindestens einen passiven Lufteinlass (4) beinhaltet, der mit einer Rückschlagvorrichtung (40) assoziiert ist.

9. Flügel (100) nach einem der Ansprüche 1 bis 8, der eine Vielzahl von aktiven Lufteinlässen (3) beinhaltet, die jeweils eine Aufblasvorrichtung (30) beinhalten, wobei jede Aufblasvorrichtung (30) dazu konfiguriert ist, gesteuert zu werden, um das Aufblasen oder das Entleeren nur eines Teils der Tragfläche (1) zu ermöglichen.

10. Flügel (100) nach einem der Ansprüche 1 bis 9, der eine Kontrollvorrichtung (5) beinhaltet, die mit den Leinen (2) verbunden ist und dazu konfiguriert ist, an einer oder mehreren Leinen (2) zu ziehen/diese zu lockern.

11. Flügel (100) nach Anspruch 5 und Anspruch 10, wobei das Steuermodul (6) mit der Kontrollvorrichtung (5) elektronisch verbunden ist.

12. Flügel (100) nach Anspruch 11, wobei das Steuermodul (6) und die Kontrollvorrichtung (5) zu einer gleichen Funktionseinheit gehören.

13. Boot (300), das mindestens ein Befestigungsorgan (301) und einen Flügel (100) nach einem der Ansprüche 1 bis 12, der mit dem Befestigungsorgan (301) verbunden ist, um das Ziehen des Bootes (300) zu ermöglichen, beinhaltet.

14. Verfahren zum Aufblasen eines Flügels (100) nach einem der Ansprüche 1 bis 12, wobei das Verfahren die folgenden Schritte beinhaltet:
- Einrichten der Tragfläche (1), sodass der passive Lufteinlass (4) in den Wind gerichtet ist, um die Tragfläche (1) auf passive Weise aufzublasen,
- wenn das Aufblasen nicht ausreicht, Aktivieren der Aufblasvorrichtung (30), um die Tragfläche (1) auf aktive Weise aufzublasen,
- Schließen der Rückschlagvorrichtung (40), wenn der Innendruck (Pi) größer als der Außendruck (Pe) vor dem passiven Lufteinlass (4) ist.

## Claims

1. Flexible wing (100) extending longitudinally on an axis (X) and comprising an air foil (1) and a plurality of rigging lines (2) linked to the air foil (1), said air foil (1) comprising a top wall (11) and a bottom wall (12), defining an internal volume (I) having an internal pressure (Pi), at least one active air inlet (3) oriented towards the front on said axis (X) and at least one active inflation device (30) in which is mounted a fan (33) configured to inject air from the outside (E), having an outside pressure (Pe), in the internal volume (I) of the air foil (1) via the active air inlet (3), the wing (100) being **characterized in that** the air foil (1) comprises at least one passive air inlet (4), configured to allow a circulation of air from the outside (E) into the internal volume (I) of the air foil (1) and at least one anti-return device (40) configured, on the one hand, to allow a circulation of air from the outside (E) to the internal volume (I) of the air foil (1) via said passive air inlet (4) when the internal pressure (Pi) is lower than the outside pressure (Pe) in front of the passive air inlet (4), and, on the other hand, to prohibit a circulation of air from the internal volume (I) of the air foil (1) to the outside (E) via said passive air inlet (4) when the internal pressure (Pi) is higher than the outside pressure (Pe) in front of the passive air inlet (4).

2. Wing (100) according to Claim 1, wherein the anti-return device (40) takes the form of a sleeve.

3. Wing (100) according to one of Claims 1 and 2, wherein the inflation device (30) comprises a safety valve (34), configured to limit the passage of a flow of air through the active air inlet (3) to the outside (E).

4. Wing (100) according to one of Claims 1 to 3, wherein the fan (33) is configured, on the one hand, to rotate in a first direction of rotation in order to inflate the internal volume (I) of the air foil (1) and, on the other hand, to rotate in a second direction of rotation in order to deflate the internal volume (I) of the air foil (1).

5. Wing (100) according to one of Claims 1 to 4, comprising a control module (6) configured to activate the fan (33) of the inflation device (30).

6. Wing (100) according to Claim 5, comprising means for measuring the internal pressure (Pi) and the outside pressure (Pe) so as to determine an overpressure, that are linked to the control module (6), the control module (6) of the inflation device (30) is configured to activate the fan (33) of the inflation device (30) when the overpressure is lower than or equal to a predetermined threshold.

7. Wing (100) according to Claim 6, wherein, said fan (33) of the inflation device (30) having a speed of rotation, the control module (6) of the inflation device (30) is configured to regulate the speed of rotation of the fan (33), so as to maintain an overpressure in the internal volume (I) of the air foil (1), measured by the pressure measurement means, at a predetermined value.

8. Wing (100) according to one of Claims 1 to 7, wherein, the air foil (1) comprising a plurality of independent volumes, each independent volume comprises at least one passive air inlet (4) associated with an anti-return device (40).

9. Wing (100) according to one of Claims 1 to 8, comprising a plurality of active air inlets (3), each comprising an inflation device (30), each inflation device (30) being configured to be controlled so as to allow the inflation or the deflation only of a part of the air foil (1).

10. Wing (100) according to one of Claims 1 to 9, comprising a monitoring device (5), linked to the rigging lines (2), configured to pull/relax on one or more rigging lines (2).

11. Wing (100) according to Claim 5 and Claim 10, wherein the control module (6) is linked electronically to the monitoring device (5).

12. Wing (100) according to Claim 11, wherein the control module (6) and the monitoring device (5) belong to a same functional unit.

13. Boat (300) comprising at least one attachment member (301) and a wing (100) according to one of Claims 1 to 12 linked to said attachment member (301) in order to allow the boat (300) to be pulled.

14. Method for inflating a wing (100) according to one of Claims 1 to 12, said method comprising the steps of:
- deployment of the air foil (1) so as to position the passive air inlet (4) facing the wind in order to inflate the air foil (1) passively,
- when the inflation is insufficient, activation of the inflation device (30) in order to inflate the air foil (1) actively,
- closure of the anti-return device (40) when the internal pressure (Pi) is higher than the outside pressure (Pe) in front of the passive air inlet (4).
